# FASCICULE DE BREVET EUROPEEN

(11) **EP 0 357 859 B1**
(45) Date de publication et mention de la délivrance du brevet: **22.12.1993**
(21) Numéro de dépôt: 88402277.3
(22) Date de dépôt: 09.09.1988
(51) Int. Cl.: H01M 4/12, C23C 2/00, H01M 6/18, H01M 10/40, H01M 4/02, H01M 4/04

(54) **Procédé de fabrication d'electrodes minces sur un feuillard**
Verfahren zur Herstellung einer von einem Streifen getragenen dünnen Elektrode
Process for the production of a thin electrode supported by a sheet

(43) Date de publication de la demande: 14.03.1990
(73) Titulaire: HYDRO-QUEBEC, Montréal Québec H2Z 1A4 (CA)
(72) Inventeur: Belanger, André, Sainte-Julie, Qc J0L 2C0 (CA); Gauthier, Michel, Laprairie, Qc J5R 1E6 (CA); Robitaille, Michel, Sainte-Julie, Qc J0L 2C0 (CA)
(74) Mandataire: Clisci, Serge

(56) Documents cités:
- EP-A- 0 119 912
- EP-A- 0 159 937
- EP-A- 0 285 476
- FR-A- 2 442 513
- US-A- 3 751 288
- US-A- 4 502 903
- US-A- 4 576 883
- PATENT ABSTRACTS OF JAPAN, vol. 6, no. 91 (E-109)[969], 28 mai 1982; & JP-A-57 23 463 (YUASA DENCHI K.K.) 06-02-1982
- PATENT ABSTRACTS OF JAPAN, vol. 11, no. 83 (E-489)[2530], 13 mars 1987; & JP-A-61 239 561 (MATSUSHITA ELECTRIC IND. CO. LTD.) 24-10-1986

## Description

L'invention concerne une électrode mince supportée sur feuillard et un procédé de préparation de cette dernière.

Le document US-A-3,751,288 décrit la fabrication de couches métalliques minces de métaux se liquéfiant à une température inférieure à 400°C, tels que l'étain, sur un feuillard en matériau plastique, tel que le polyéthylène, par l'application desdits métaux à l'état fondu.

Selon le document FR-A-2 442 513 des assemblages en un feuillard plastique et une couche de sodium d'une épaisseur de 2 mm sont réalisés par coulage du sodium à l'état fondu sur ledit feuillard et sa solidification suivante.

Dans la demande EP-A-285 476, on a décrit la fabrication d'électrodes minces, supportées sur un feuillard conducteur électronique, d'un élément choisi parmi le lithium, le lithium allié ou dopé, en déroulant le feuillard en continu, de préférence dans un bain du métal pur, allié ou dopé, de façon à appliquer continuellement sur l'une des faces du feuillard, une quantité constante de l'élément à l'état fondu.

Or, depuis le dépôt de cette demande, les recherches en laboratoire ont permis de démontrer que le lithium pur, allié ou dopé pouvait également être épandu en couche mince et uniforme sur certaines matières plastiques résistantes au lithium pur, allié ou dopé, ou on d'autres termes qui sont sensiblement stables on présence de lithium pur, allié ou dopé, à l'état fondu. Plus particulièrement, ce dernier peut aussi être épandu sur des films d'électrolytes solides polymères entrant dans la fabrication d'accumulateurs au lithium.

L'invention a donc pour objet de mettre en jeu les propriétés de mouillage du lithium fondu pur, allié ou dopé sur des matériaux, notamment des plastiques qui sont substantiellement stables par rapport au lithium. Dans le contexte de la présente invention le terme plastique substantiellement stable par rapport au lithium implique que le plastique n'est pas stable thermodynamiquement par rapport au lithium et qu'il comporte des groupements chimiques susceptibles de réagir avec le lithium, et que dans les conditions du dépôt de lithium fondu et dès le retour à la température normale d'utilisation de la pile, la réaction entre le lithium et le plastique rste localisée à l'interface et cesse de progresser, d'où l'appellation substantiellement stable ou cinétiquement stable. A titre d'information additionnelle sur cette particularité du lithium de former des films bloquants toute progression ultérieure on pourra référer au livre du Dr. Gabano: "Lithium Batteries.

De plus, dans le contexte de la présente demande, le terme "plastique" englobe toutes les formulations à base de thermoplastiques ou de thermodurcissables.

L'invention a aussi pour objet l'élaboration de rouleaux de films lithium d'épaisseur contrôlée épandu sur un support constitué de plastiques substantiellement stables par rapport au lithium ou d'électrolytes solides polymères rendus conducteurs par les ions Li⁺.

Un autre objet de la présente invention consiste à régler le dispositif utilisé ainsi que la vitesse du déroulement du feuillard en plastique ou en électrolyte solide polymère de façon à permettre des traitements thermiques du lithium.

L'invention a aussi pour objet d'épandre du lithium sur des plastiques substantiellement stables par rapport au lithium, qui constituent non seulement un support au lithium, mais aussi un matériau isolant électrique pour les batteries de type enroulé, la surface de ces plastiques ayant été métallisée dans certains cas pour améliorer le mouillage avec le lithium. Dans ce cas particulier, le lithium en soi sans l'aide de collecteur métallique, est responsable de la collection de courant.

Un autre objet de l'invention vise la mise au point d'un procédé rapide de dépôt d'une couche d'épaisseur contrôlée de lithium sur un électrolyte solide polymère rendu conducteur par les ions lithium, constituant ainsi une demi-pile. Si nécessaire, un collecteur métallique peut après coup être placé sur le film de lithium.

Un autre objet de l'invention consiste à mettre au point un procédé rapide de dépôt d'une couche d'épaisseur contrôlée de lithium sur un électrolyte solide polymère, conducteur par les ions Li⁺, l'électrolyte faisant partie d'un pré-assemblage électrolyte-électrode positive, constituant une pile complète Li/électrolyte/électrode positive.

L'invention a aussi pour objet d'épandre directement un film d'épaisseur contrôlée de lithium fondu sur l'électrolyte de la pile, de façon à éliminer plusieurs étapes d'assemblage des piles, notamment le pelage du support de plastique et le transfert de la surface libre de lithium sur l'électrolyte de la pile.

L'invention a aussi pour objet d'utiliser le film plastique recouvert de lithium comme isolant électrique dans les piles produites par enroulement afin d'éviter tout court circuit.

Un autre objet de l'invention consiste à produire un enroulement en pile beaucoup plus léger que lorsqu'on enroule un feuillard métallique recouvert de lithium. D'autre part, ces supports plastiques sont généralement beaucoup plus énocomiques que leurs équivalents métalliques.

La présente invention concerne un procédé défini dans la revendication 1 annexée.

Un autre objet de la présente invention réside en une électrode mince supportée, caractérisée en ce qu'elle comprend un feuillard constitué d'un plastique substantiellement stable par rapport au lithium choisi parmi les isolants électriques et les électrolytes solides polymères conducteurs par les ions lithium, dont au moins une des faces est au moins partiellement recouverte d'une couche d'un élément choisi parmi le lithium, le lithium allié ou dopé, dont le point de fusion ne s'écarte pas du point de fusion du lithium par plus ou moins 50°C. La couche de l'élément possède une épaisseur régulière dont la valeur varie entre environ 0,1 et environ 40 µm, la surface de la couche est pratiquement sans aspérité et elle n'est pas détachable du feuillard au couteau.

Un autre objet de l'invention consiste en une demi-pile constituée d'un électrolyte reposant sur un support éventuellement pelable, l'électrolyte ayant été recouvert d'une couche d'un élément choisi parmi le lithium, le lithium allé ou dopé, dont le point de fusion ne s'écarte pas du point de fusion du lithium par plus ou moins de 50°C, la couche de l'élément ayant une épaisseur régulière dont la valeur varie entre environ 0,1 µ et environ 40µ, la surface de la couche étant pratiquement sans aspérité, et n'étant pas détachable du feuillard au couteau.

Un autre object de l'invention réside en un générateur électrochimique comportant une anode , une cathode ainsi qu'un électrolyte caractérisé en ce que l'anode est une électrode mince telle que définie ci-dessus.

Un autre objet de l'invention réside en un générateur électrochimique comportant une demi-pile ainsi qu'une cathode, caractérisé en ce que la demi-pile est telle que défini ci-dessus.

Il va de soi, comme il paraîtra évident à l'homme de l'art, que les surfaces à revêtir de lithium pourront avoir été traitées préalablement de façon à promouvoir l'adhésion du lithium.

Le plastique substantiellement stable peut être choisi dans le groupe des isolants électriques constitué par un polyéthylène, un polypropylène, un polyester, un polyéther, un polysulfone et un polyimide. De préférence le plastique isolent électrique sera constitué de chaînes de polyether, sous forme de copolymères de réseaux de polymères peigne ou autres.

Lorsque le feuillard est un électrolyte solide polymère, ce dernier est de préférence constitué de polyéther additionné de sel de lithium, sous forme de copolymère de réseaux ou de polymères peigne. Par example, il sera choisi dans le groupe constitué par le polyoxyéthylène, un copolymère de polyoxyéthylène et de méthyl glycidyl éther, et un copolymère de polyoxyéthylène et de méthyl glycidyl éther contenant une ou plusieurs fonctions réticulables.

Les sels de lithium sont de préférence choisis parmi LiCl0₄, LiCF₃SO₃, LiB₁₂H₁₂, LiAsF₆, LiN (CF₃SO₂)₂, LiBF₄, LiB0₄.

L'électrolyte peut être lui-même en contact sur l'autre face avec une électrode positive pour constituer une demi-pile.

L'invention va maintenant être illustrée par les dessins annexés donnés à titre d'exemple et sans caractère limitatif. Dans les dessins:
la FIGURE 1 est un schéma représentant un appareil permettant la mise en oeuvre du procédé selon la présente invention;
la FIGURE 2 est un schéma d'un autre appareil permettant la mise en oeuvre du procédé;
la FIGURE 3 est un autre schéma illustrant un racloir pouvant être adapté aux appareils des figures 1 et 2;
la FIGURE 4 est une coupe d'un accumulateur incorporant une anode selon la présente invention;
la FIGURE 5 est une vue en plant d'un feuillard métallique recouvert d'une bande de lithium;
la FIGURE 6 est une autre vue en plan d'un feuillard métallique avec motif répété; et
la FIGURE 7 est une autre vue en plant d'un feuillard métallique avec un autre motif répété.

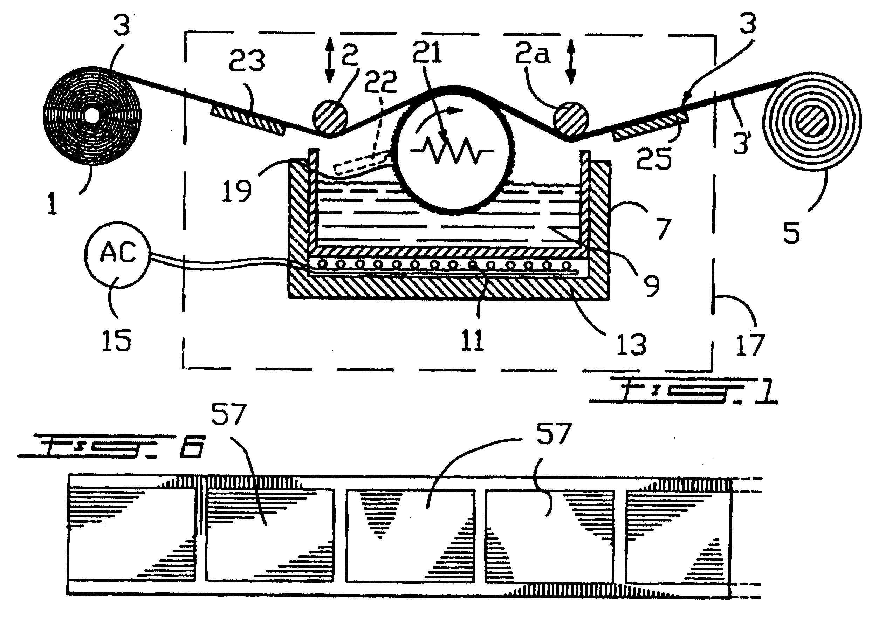

L'appareil illustré schématiquement en Figure 1 est constitué d'une bobine 1 d'alimentation en feuillard 3 métallique ou métallisé ou plastique. D'autre part, pour recevoir le feuillard une fois celui-ci traité, on retrouve une bobine réceptrice 5 assurant la traction du feuillard lors du traitement qui sera décrit plus loin. L'appareil comprend d'autre part un bain 7 destiné à contenir du lithium fondu 9. Pour s'assurer que le lithium 9 sera maintenu à l'état fondu et conservera une température contrôlée, on a prévu un élément chauffant 11 ainsi qu'une isolation thermique 13. On notera que l'élément chauffant est relié de façon conventionnelle à une source de courant alternatif 15. Enfin, on a illustré de façon schématique en 17, une zone ou le bain ainsi que le feuillard 13 en train d'être traité seront maintenus sous une atmosphère contrôlée de façon à éliminer l'oxygène, la vapeur d'eau et les autres gaz risquant de réagir avec le lithium. Cette zone, est tout à fait conventionnelle et ne fait pas partie de l'invention.

L'enducteur utilisé pour déposer un film de lithium fondu 3′ sur la face inférieure du feuillard 3 est constitué d'un rouleau texturé 19 dont le motif en surface permet à cause de sa capillarité le dépôt de lithium sur la face inférieure du feuillard 3. De plus, afin de conserver une température adéquate au lithium fondu, ce rouleau texturé 19 est muni des moyens de chauffe conventionnels 21 permettant de contrôler adéquatement la température du lithium fondu sur la surface du rouleau. On peut, si on le désire prévoir une racle 22 (illustrée en pointillé sur la figure 1) permettant d'enlever tout excès de matériau en fusion de la surface du rouleau avant d'appliquer ce dernier contre la face 3, à enduire du feuillard.

Afin d'assurer un contact adéquat du feuillard sur le rouleau texturé 19, on a prévu des tiges 2,2a qui s'appuient sur la face supérieure du feuillard 3 et permettent d'ajuster l'angle de contact du feuillard 3 sur le rouleau texturé 19. Avant que le feuillard 3 ne pénètre dans la zone définie par le lithium fondu, on a prévu un conditionneur de température 23 permettant d'ajuster la température du feuillard à son arrivée au-dessus du bain de lithium fondu. De même, on a prévu un autre conditionneur de température 25 lequel est ajusté soit pour produire un traitement thermique ou provoquer un refroidissement du couple Li^{o}/feuillard avant son enroulement sur le rouleau 5.

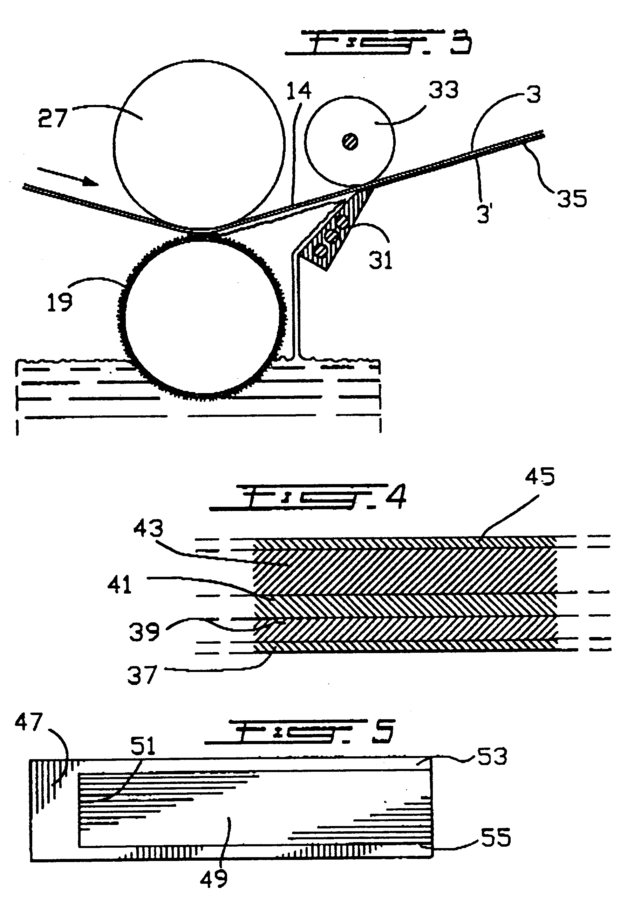

On a illustré sur la Figure 2 une modification de l'appareil schématisé en Figure 1. Dans cette réalisation, dont les parties communes avec l'appareil illustré sur la Figure 1 sont identifiées par les mêmes chiffres de référence, on verra que l'on a prévu un rouleau 27 permettant l'entraînement par friction du feuillard 3 entre les rouleaux 19 et 27. D'autre part, ce rouleau 27 est muni de moyens de chauffage 29 afin d'assurer une température adéquate au feuillard lorsque celui-ci est sous traitement.

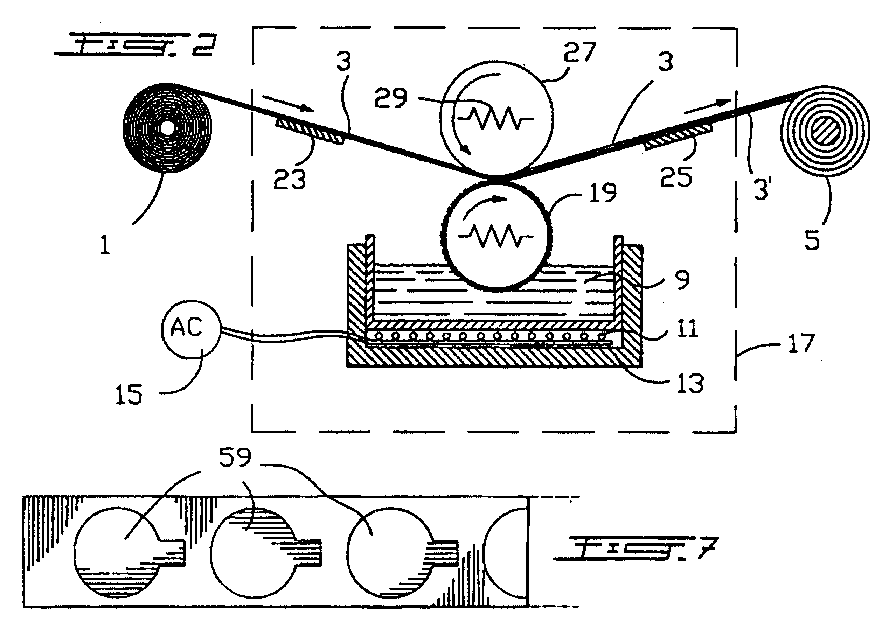

En se référant maintenant à la Figure 3, on verra que le dispositif illustré en Figure 2 peut être muni d'un racloir 31 permettant de réduire l'épaisseur et ou d'uniformiser des imperfections de surface qu'aurait pu laisser le rouleau engraveur 19. Cet outil supplémentaire doit être chaud pour permettre aux excès raclés de retourner au bain en voie liquide. Cela est rendu possible par l'introduction de moyens de chauffage (non illustrés) et tout à fait conventionnels. De plus, afin que la surface raclée soit bien homogène, on a prévu un rouleau d'appui 33 immédiatement au-dessus du racloir 31. En 35, on illustre la surface homogénéisée du feuillard enduit de lithium fondu. Ce dispositif est particulièrement utile quand on dépose des épaisseurs importantes de lithium. Dans ce cas, le motif même du rouleau graveur risque de laisser des marques sur le lithium après le refroidissement. Le racloir 33 chauffant peut éliminer ces imperfections de surface.

On peut utiliser le produit obtenu selon l'invention pour constituer un accumulateur tel qu'illustré en Figure 4. On verra que ce dernier comporte un filmde cuivre 37 dont l'épaisseur est environ 10 u. La couche de lithium 39 obtenue par le procédé selon l'invention a une épaisseur d'environ 20 µ. L'accumulateur est constitué d'autre part d'un électrolyte polymère 41 de 20 µ d'épaisseur, et de l'électrode positive 43 de 40 µ d'épaisseur et d'un collecteur de cuivre 45 de 10 µ d'épaisseur le tout ayant une épaisseur de 100 µ.

Des exemples de feuillards recouverts de bandes de lithium sont illustrés aux Figures 5, 6 et 7. Dans la Figure 5, on voit le feuillard métallique 47, ainsi que le lithium métallique 49 déposé sur le feuillard 47. Le début de l'épandage est illustré en 51 tandis que les deux bandes non recouvertes sont identifiées par les chiffres de référence 53,55. Si l'on désire avoir des feuillards recouverts de lithium à motifs répétés, on peut se servir d'un rouleau enducteur 19 dont le motif servira à produire des motifs répétés 57. On peut évidemment préférer d'autres motifs que celui illustré dans la Figure 6, par exemple, celui illustré en Figure 7 en 59.

Les exemples non limitatifs suivants illustrent les nouveaux aspects de l'invention, sans en restreindre la portée.

### Exemple 1

A l'aide du dispositif de la figure 2 faisant partie de la divulgation principale, l'assemblage suivant fut préparé dans une boîte à gants à hélium. D'abord la bobine 1 le feuillard mince 3 est maintenant constitué d'un film mince d'électrolyte polymère dont la composition est la suivante: POE-LiClO₄ de ratio O/Li- 12/1 évaporé sur un film de PP de 25 microns d'épaisseur à partir d'une solution de l'électrolyte dans l'acétonitrile tel que décrit en détail dans le brevet américain No 4 578 326. Cet électrolyte supporté est acheminé vers le rouleau applicateur, la face libre de l'électrolyte du côté du rouleau enduit de lithium fondu. Dans cette application en particulier il est important de minimiser le temps de contact entre l'électrolyte-polymère et le rouleau applicateur afin d'éviter toute déformation du matériau plastique ou formation de films de passivation nuisibles. A cette fin, le conditionneur 23 est maintenu à une température inférieure à 10°C et la vitesse d'entraînement à plus de 30 cm/min. De même la température du bain de lithium fondu est de 210°C soit quelques 30°C au-dessus du point de fusion du lithium. Le rouleau 27 qui contrôle la pression et l'angle de contact du rouleau applicateur sur le polymère est gardé également froid: 0°C. Avec le même rouleau que celui utilisé à l'exemple 1, on a pu déposé de 3-4 microns de lithium d'une excellente qualité de surface. L'électrolyte couvert de lithium a ensuite été accolé à une électrode positive composite conventionnelle (après pelage du support de pp: TiS₂/noir de Shawinigan/électrolyte sur Al de 2C/cm² alors que du côté du lithium on a apposé un feuillard mince de nickel en guise de collecteur de courant et dont les caractéristiques en piles se sont avérées très semblables aux autres électrodes de lithium sur collecteurs métalliques décrites dans la revendication principale. Plus de 20 cycles ont été réalisés sur une pile ainsi réalisée à un régime de C/12 et à une température de 80°C, ce qui confirme que le procédé de dépôt ne provoque pas la formation de film isolant nuisible sur la surface du lithium en contact avec l'électrolyte.

### Exemple 2

Le même montage qu'à l'exemple 1 ci-dessus fut utilisé sauf que le support était constitué d'un feuillard de copolymère OE-MGE (oxyde d'éthylène; méthyl-glycidyl éther) de ratio OE/MGE - 80/20 d'une épaisseur de 100 microns supporté sur un feuillard de Téflon^{MD} de 20 microns d'épaisseur. On y a déposé entre 3 et 5 micromètres de lithium quand la température du bain était de 205°C et la vitesse de déroulement du feuillard égale à 50 cm/min.

Montée en face d'une cathode TiS₂ de 4 cm² cette pile a montré une impédance inférieure à 100 ohms à 60°C et par la suite un excellent comportement au cyclage.

### Exemple 3

Le feuillard était constitué d'une membrane équivalente à l'exemple 2 mais contenant environ 5 % en poids d'AGE (allyl-glycidyl éther). La présence de cette fonction de réticulation confère à la membrane une fois élaborée de meilleures propriétés mécaniques en étant plus résistante aux déformations. On a pu y déposer environ 7 à 8 microns de lithium maintenu à une température de 250°C et à une vitesse de 25 cm/min. On a apposé une cathode d'oxyde de vanadium de 4 cm² additionnée de noir de Shawinigan et du même électrolyte que celui utilisé pour la membrane décrite à l'exemple 1 et nous avons tout de suite obtenu la tension caractéristique de ce type de pile soit 3.4V. Une impédance de pile inférieure à 150 ohms à 20°C a confirmé que l'interface lithium-électrolyte était tel que celui obtenu avec du lithium produit commercialement par laminage. La pile a pu être cyclée d'une manière tout à fait normale à des régimes de décharge de l'ordre C/10 et de charge à C/20 sans dendrites et avec des rendements coulombiques supérieurs à 95 %.

### Exemple 4

On a utilisé la membrane de l'exemple 1 ci-dessus mais qui ne contenait pas de sel de lithium et d'une épaisseur de 100 microns. On a déposé du lithium voie fondue sur cette membrane à l'aide du dispositif de la figure 1 en utilisant un motif pyramidal du rouleau engraveur dont les caractéristiques sont les suivantes: 200 counts; 24 ohms depth et vol. -5,0 tel que défini dans la littérature d'INTA-ROTO Inc. de Virginie. A l'aide de ce rouleau maintenu à une température de 200°C du bac de lithium d'une vitesse de 30 cm/min on y a déposé un film de lithium d'une épaisseur régulière de 3 microns sans défaut apparent. Lorsqu'assemblé en pile la résistance de l'interface Li-électrolyte s'est révélée tout à fait équivalente à celle observée pour le lithium produit par laminage.

### Exemple 5

On a utilisé le même électrolyte à l'exemple 3 sauf que cet électrolyte avait déjà été pré-assemblé à une électrode positive d'oxyde de vanadium supportée sur Cu, le tout emmagasiné sur une bobine. Cet ensemble demi-pile a été déroulé vers l'enducteur, le côté électrolyte faisant face au lithium fondu. A une vitesse de 40 cm/min. 5 microns de lithium ont été déposés en une largeur correspondante à l'électrode positive située juste en face.

### Exemple 6

Dans cet exemple particulier on prépare un film support d'aluminium 10 µ revêtu d'un vernis isolant électrique -8 µ constitué d'une résine à base d'époxy dans le commerce et servant par exemple, à la protection des métaux pour des fins décoratives. Après réticulation le support d'aluminium protégé est séché à 100°C durant quelques heures. Par la suite on dépose selon le procédé de l'invention un film de lithium de 5 µ dans des conditions équivalentes à celles de l'exemple 2. Cet ensemble Al/résine isolante/lithium 5 µ est ensuite mis en contact avec un sous-ensemble électrolyte/électrode TiS₂ (1Coulomb/cm²/collecteur en prenant soin par le moyen de masques de polypropylène de laisser une partie de la surface de lithium libre afin de permettre la collection du courant de cette électrode. Les matériaux et les compositions de la positive et de l'électrolyte sont les mêmes que pour l'exemple 2. Cette pile est ensuite cyclée à la température ambiante sur plus de 150 cycles ce qui démontre bien la stabilité cinétique du revêtement des supports peu coûteux mais normalement incompatibles avec le lithium même à la température ambiante. L'emploi d'un vernis réticulable n'est pas essentiel et d'autres vernis résistants peuvent être utilisés à cette fin.

## Revendications

1. Procédé de fabrication d'électrodes minces, supportées sur un feuillard constitué exclusivement au moins au surface d'un plastique substantiellement stable par rapport au lithium choisi parmi les isolants électriques et les electrolytes solides polymères conducteur par les ions lithium, d'un élément choisi parmi le lithium, le lithium allié ou dopé dont le point de fusion ne s'écarte pas du point de fusion du lithium par plus ou moins 50°C, et d'épaisseur constante dudit élément, à partir d'un enroulement dudit feuillard et d'une source dudit élément, caractérisé en ce que l'on constitue un bain dudit élément à l'état fondu maintenu en atmosphère inerte, on déroule en continu ledit feuillard à une vitesse de 25 à 50 cm/min, l'on applique continuellement sur au moins l'une des deux faces dudit feuillard, une quantite constante de l'élément à l'état fondu au moyen d'un rouleau d'application texturé à température controlée léchant le bain dudit élément fondu, de manière à produire un film sur ledit feuillard dont l'épaisseur est constante et se situe entre environ 0,1 et environ 40 µm et dont la surface est homogène et uniforme, et à empêcher l'élément à l'état fondu de figer au contact dudit feuillard, et l'on provoque la solidification contrôlée dudit élément sur ledit feuillard après formation dudit film sur ledit feuilard.

2. Procédé selon la revendication 1, caractérisé en ce que le feuillard est constitué d'un plastique isolant électrique substantiellement stable par rapport au lithium.

3. Procédé selon la revendication 1, caractérisé en ce que ledit plastique est un revêtement plastique mince substantiellement stable avec le lithium et déposé sur un film support normalement incompatible avec le lithium tel l'aluminium et comprenant plus particulièrement des formulations à base de résines époxy, d'acrylates, de résines sulfones et de polyamides.

4. Procédé selon la revendication 2, caractérisé en ce que ledit plastique isolant électrique est choisi dans le groupe consitué par un polyéthylène, un polypropylène, un polyester, un polyéther, un polysulfone et un polyimide.

5. Procédé selon la revendication 2, caractérisé en ce que le plastique isolant électrique est constitué de chaînes de polyéther sous forme de copolymères, de réseaux ou de polymères peigne.

6. Procédé selon la revendication 4, caractérisé en ce que le polyéther est choisi dans le groupe consitué par le polyoxyéthylène, un copolymère de polyoxyéthylène et de méthyl glycidyl éther et un copolymère de polyoxyéthylène et de méthyl glycidyl éther contenant une ou plusieurs fonctions réticulables.

7. Procédé selon la revendication 1, caractérisé en ce que le feuillard est constitué d'un électrolyte solide polymère conducteur par les ions lithium.

8. Procédé selon la revendication 7, caractérisé en ce que l'électrolyte est constitué de chaînes de polyéther additionné d'un sel de lithium sous forme de copolymères, de réseaux ou de polymères peigne.

9. Procédé selon la revendication 8, caractérisé en ce que le sel de lithium est choisi parmi LiCl0₄, LiCF₃SO₃, LiB₁₂H₁₂, LiAsF₆, LiN(CF₃SO₂)₂, LiBF₄, LiB0₄.

10. Procédé selon la revendication 8, caractérisé en ce que l'électrolyte est exempt de sel de lithium au moment de l'application du lithium.

11. Procédé selon la revendication 8, caractérisé en ce que le polyéther est choisi dans le groupe constitué par le polyoxyéthylène, un copolymère de polyoxyéthylène et de méthyl glycidyl éther, et un copolymère de polyoxyéthylène et de méthyl glycidyl éther contenant une ou plusieurs fonctions réticulables.

12. Procédé selon la revendication 7, caractérisé en ce que l'électrolyte repose sur un support plastique éventuellement pelable.

13. Procédé selon la revendication 7, caractérisé en ce que l'électrolyte est supporté sur une électrode positive pour constituer une demi-pile.

## Claims

1. Method of manufacturing thin electrodes, supported on a strip formed exclusively, at least on the surface, from a plastic which is substantially stable with respect to lithium and is chosen from amongst electrical insulators and polymeric solid electrolytes made conductive by lithium ions, and a substance chosen from amongst lithium or alloyed or doped lithium, the melting point of which does not differ from the melting point of lithium by plus or minus 50°C, and with a constant thickness of the said substance, from a coil of the said strip and a source of the said substance, characterised in that a bath of the said substance in the molten state kept in an inert atmosphere is set up, the said strip is continuously unwound at a speed of 25 to 50 cm/min, a constant quantity of the substance in the molten state is applied continuously to at least one of the two faces of the said strip by means of a textured applicator roller at a controlled temperature brushing the bath of the said molten substance, so as to produce a film on the said strip, the thickness of which is constant and is between approximately 0.1 and approximately 40 µm and the surface of which is homogeneous and uniform, and preventing the substance in the molten state from setting on contact with the said strip, and the controlled solidification of the said element on the said strip is brought about after the formation of the said film on the said strip.

2. Method according to Claim 1, characterised in that the strip consists of an electrically insulating plastic which is substantially stable with respect to lithium.

3. Method according to Claim 1, characterised in that the said plastic is a thin plastic covering which is substantially stable with lithium and deposited on a base film which is normally incompatible with lithium, such as aluminium, and more particularly comprising formulations based on epoxy resins, acrylates, sulphone resins and polyamides.

4. Method according to Claim 2, characterised in that the said electrically insulating plastic is chosen from the group consisting of a polyethylene, polypropylene, polyester, polyether, polysulphone and polyimide.

5. Method according to Claim 2, characterised in that the electrically insulating plastic consists of polyether chains in the form of copolymers, lattices or comb-shaped polymers.

6. Method according to Claim 4, characterised in that the polyether is chosen from the group consisting of polyoxyethylene, a copolymer of polyoxyethylene and methyl glycidyl ether and a copolymer of polyoxyethylene and methyl glycidyl ether containing one or more cross-linkable functions.

7. Method according to Claim 1, characterised in that the strip consists of a polymeric solid electrolyte made conductive by lithium ions.

8. Method according to Claim 7, characterised in that the electrolyte consists of polyether chains with a lithium salt added in the form of copolymers, lattices or comb-shaped polymers.

9. Method according to Claim 8, characterised in that the lithium salt is chosen from amongst LiCl0₄, LiCF₃SO₃, LiB₁₂H₁₂, LiAsF₆' LiN(CF₃SO₂)₂, LiBF₄, LiBO₄.

10. Method according to Claim 8, characterised in that the electrolyte is free from lithium salt at the time of application of the lithium.

11. Method according to Claim 8, characterised in that the polyether is chosen from the group consisting of polyoxyethylene, a copolymer of polyoxyethylene and methyl glycidyl ether, and a copolymer of polyoxyethylene and methyl glycidyl ether containing one or more cross-linkable functions.

12. Method according to Claim 7, characterised in that the electrolyte rests on a plastic support which may optionally be peelable.

13. Method according to Claim 7, characterised in that the electrolyte is supported on a positive electrode in order to form a half-battery.

## Patentansprüche

1. Verfahren zur Herstellung dünner Elektroden, die von einem Streifen getragen werden, der auf mindestens einer Oberfläche ausschließlich aus einem gegenüber Lithium im wesentlichen stabilen Kunststoff besteht, ausgewählt aus den elektrischen Isolatoren und den festen für Lithiumionen leitfälligen Polymerelectrolyten, aus einem Stoff ausgewählt aus Lithium, legiertem Lithium oder gedoptem Lithium, dessen Schmelzpunkt vom Schmelzpunkt des Lithiums um nicht mehr oder weniger als 50 °C abweicht, und mit einer konstanten Dicke des Stoffes, ausgehend von einer Spule des Streifens und einer Quelle des Stoffes, dadurch gekennzeichnet, daß man ein Bad des Stoffes im geschmolzenen Zustand, das unter einer inerten Atmosphäre gehalten wird, bildet, kontinuierlich den Streifen mit einer Geschwindigkeit vom 25 bis 50 cm/min abrollt, auf mindestens einer der beiden Oberflächen des Streifens kontinuierlich eine konstante Menge des Stoffes im geschmolzenen Zustand mittels einer Grundierungswalze bei einer geregelten Temperatur, die das Bad des Stoffes geschmolzen hält, auf eine Weise aufbringt, um einen Film auf dem Streifen auszubilden, dessen Dicke konstant ist und zwischen ungefähr 0.1 und ungefähr 40 µm liegt und dessen Oberfläche homogen und gleichmäßig ist, und um zu verhindern, daß der Stoff im geschmolzenen Zustand in Kontakt mit dem Streifen fest wird, und man die kontrollierte Verfestigung des Stoffes auf dem Streifen nach Bildung des Films veranlaßt.

2. Verfahren nach Anspruch 1, dadurch gekennzeichnet, daß der Streifen aus einem im wesentlichen gegenüber Lithium stabilen elektrisch isolierenden Kunststoff besteht.

3. Verfahren nach Anspruch 1, dadurch gekennzeichnet, daß der Kunststoff ein dünner Kunststoffüberzug ist, der im wesentlichen gegenüber Lithium stabil ist und auf einem normalerweise mit Lithium inkompatiblen Trägerfilm, wie Aluminium, abgeschieden ist und insbesondere Formulierungen auf der Basis von Epoxyharzen, Acrylaten, Sulfonharzen und Polyamiden umfaßt.

4. Verfahren nach Anspruch 2, dadurch gekennzeichnet, daß der elektrisch isolierende Kunststoff ausgewählt ist aus der Gruppe bestehend aus Polyethylen, Polypropylen, Polyester, Polyether, Polysulfon und Polyimid.

5. Verfahren nach Anspruch 2, dadurch gekennzeichnet, daß der elektrisch isolierende Kunststoff aus Polyetherketten in Form von Copolymeren, von Harzen oder von Kammpolymeren besteht.

6. Verfahren nach Anspruch 4, dadurch gekennzeichnet, daß der Polyether ausgewählt ist aus der Gruppe bestehend aus Polyoxyethylen, einem Copolymer von Polyoxyethylen und Methylglycidylether, und einem Copolymer von Polyoxyethylen und Methylglycidylether, das eine oder mehrere vernetzbaren Funktionen enthält.

7. Verfahren nach Anspruch 1, dadurch gekennzeichnet, daß der Streifen aus einem festen Polymerelektrolyten, der für Lithiumionen leitfähig ist, besteht.

8. Verfahren nach Anspruch 7, dadurch gekennzeichnet, daß der Elektrolyt aus einer mit einem Lithiumsalz versetzten Polyetherkette in Form von Copolymeren, Harzen oder Kammpolymeren aufgebaut ist.

9. Verfahren nach Anspruch 8, dadurch gekennzeichnet, daß das Lithiumsalz ausgewählt ist unter LiClO₄, LiCF₃SO₃, LiB₁₂H₁₂, LiAsF₆, LiN(CF₃SO₂)₂, LiBF₄, LiBO₄.

10. Verfahren nach Anspruch 8, dadurch gekennzeichnet, daß der Elektrolyt zum Zeitpunkt der Applikation von Lithium frei von Lithiumsalz ist.

11. Verfahren nach Anspruch 8, dadurch gekennzeichnet, daß der Polyether ausgewählt ist aus der Gruppe bestehend aus Polyoxyethylen, einem Copolymer von Polyoxyethylen und Methylglycidylether, und einem Copolymer von Polyoxyethylen und Methylglycidylether, das eine oder mehrere vernetzbare Funktionen enthält.

12. Verfahren nach Anspruch 7, dadurch gekennzeichnet, daß der Elektrolyt auf einem gegebenenfalls abziehbaren Kunststoffträger aufliegt.

13. Verfahren nach Anspruch 7, dadurch gekennzeichnet, daß der Elektrolyt von einer positiven Elektrode getragen wird, um eine Halbzelle auszubilden.
